# EUROPEAN PATENT APPLICATION

(11) **EP 2 679 860 A2**
(43) Date of publication of application: **01.01.2014**
(21) Application number: 13172866.9
(22) Date of filing: 19.06.2013
(51) Int. Cl.: F16F 15/08

(54) **Annular isolator with secondary features**

(30) Priority: 29.06.2012 US 201213538235
(71) Applicant: Honeywell International Inc., Morristown, NJ 07962-2245 (US)
(72) Inventor: Braman, Todd L., Morristown, NJ New Jersey 07962-2245 (US); Goepfert, Scott James, Morristown, NJ New Jersey 07962-2245 (US); Hanson, Timothy J., Morristown, NJ New Jersey 07962-2245 (US)
(74) Representative: Houghton, Mark Phillip

(57) **Abstract**

In one embodiment, a motion attenuating isolator (106) is provided. A main portion (202) of the isolator (106) includes one or more members composed of an elastomeric material. The one or more members are configured to form an annular shape between an isolated portion (102) and a non-isolated portion (104). The main portion (202) defines one or more circumferential gaps (206) within the annular shape. A plurality of sets of secondary features (204) is disposed within the circumferential gaps (206). Secondary features (202) in the plurality of sets of secondary features (204) are composed of an elastomeric material, and each set of secondary features (204) includes a first secondary feature (204) that extends from the isolated portion and a second secondary feature (204) that extends from the non-isolated portion (104) of the system (100). Each first secondary feature (204) is configured to engage with a corresponding second secondary feature (204) during displacement of the isolated portion (102) with respect to the non-isolated portion (104) in a respective direction.

## Description

### BACKGROUND

Sensitive components are often isolated from shock, vibrational, and acoustic energy with an isolation system. Passive isolation systems include one or more isolators that couple an isolated portion of a system with a non-isolated portion of the system. The isolator(s) absorb energy present in the non-isolated portion of a system such that less of the energy is transferred to isolated portion of the system. Examples of components that are often mounted with an isolation system include: high performance gyroscopes, inertial sensor assemblies (ISA), inertial measurement units (IMU), accelerometers, and microelectromechanical devices (MEMs).

### SUMMARY

In one embodiment, a motion attenuating isolator is provided. The motion attenuating isolator comprises a main portion configured to couple an isolated portion of a system to a non-isolated portion of the system. The main portion includes one or more members composed of an elastomeric material. The one or more members are configured to form an annular shape between the isolated portion and the non-isolated portion. The main portion defines one or more circumferential gaps within the annular shape. A plurality of sets of secondary features is disposed within the circumferential gaps. Secondary features in the plurality of sets of secondary features are composed of an elastomeric material, and each set of secondary features includes a first secondary feature that extends from the isolated portion and a second secondary feature that extends from the non-isolated portion of the system. Each first secondary feature is configured to engage with a corresponding second secondary feature during displacement of the isolated portion with respect to the non-isolated portion in a respective direction.

### DRAWINGS

The following exemplary figures are intended to aid the understanding of the written description of the exemplary embodiments and should not be considered limiting in scope.

Figure 1A is a perspective view, Figure 1B is a cross-sectonal view, and Figure 1C is an exploded view of an example system having an isolated portion coupled to a non-isolated portion with a passive isolator.

Figure 2A is a perspective view, Figure 2B is a magnified cut-away view, Figure 2C is a cross-sectional view, and Figure 2D is an exploded view of the isolator from the system of Figures 1A-1C.

Figure 3 is a graph illustrating an example response of the main portion of the isolator from the system of Figures 1A-1C.

Figure 4 is a graph illustrating an example response of a combination of the main portion and the secondary features from the system of Figures 1A-1C.

Figure 5A is a perspective view, Figure 5B is a magnified cut-away view, Figure 5C is a cross-sectional view, and Figure 5D is an exploded view of another example isolator that can be used in the system of Figures 1A-1C.

Figure 6A is a magnified view of one section of a set of opposing secondary features of the isolator of the system of Figures 1A-1C. Figures 6B and 6C depict other embodiments of a set of opposing features having a more rounded shape. Figures 6D - 6F illustrate yet other embodiments of a set of opposing features comprising projections with smaller projections thereon and/or nearby. Figure 6G illustrates yet another embodiment of a set of opposing features showing clips for connecting to the isolated and non-isolated portions of the system of Figures 1A-1C.

Figures 7A - 7F illustrate some possible relative motions occurring between the inner ring feature and outer ring feature of the set of opposing features from Figure 6A.

Figure 8 is an example model of the isolator of Figures 1A-1C.

Figure 9 is a flow chart showing one embodiment in the method of making and using the isolators of Figures 1A-1C.

In accordance with common practice, the various displayed features are not necessarily drawn to scale but are drawn to emphasize specific features relevant to the exemplary embodiments.

### DETAILED DESCRIPTION

In the following description, reference is made to the accompanying drawings and specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following description is, therefore, not to be taken in a limiting sense.

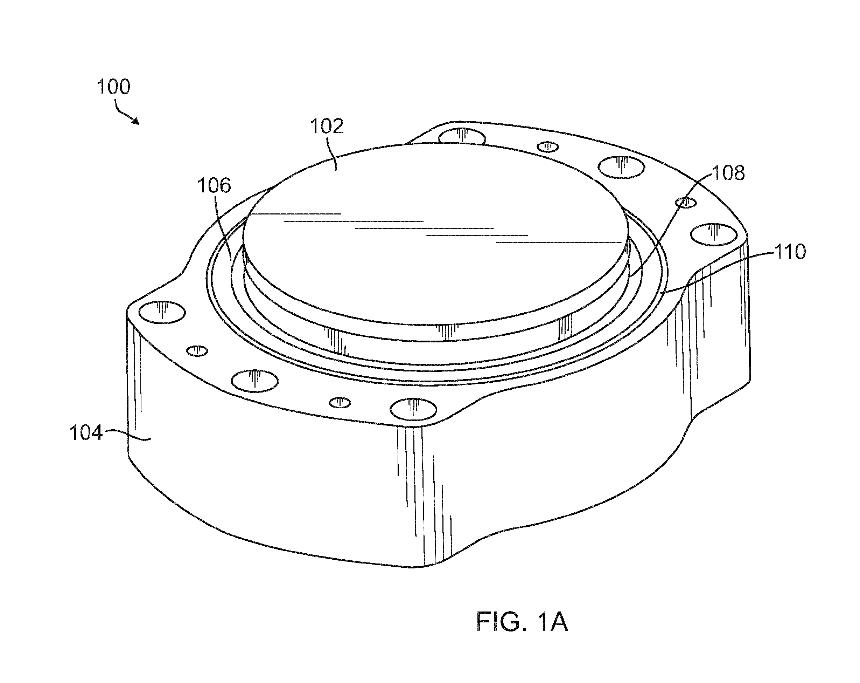

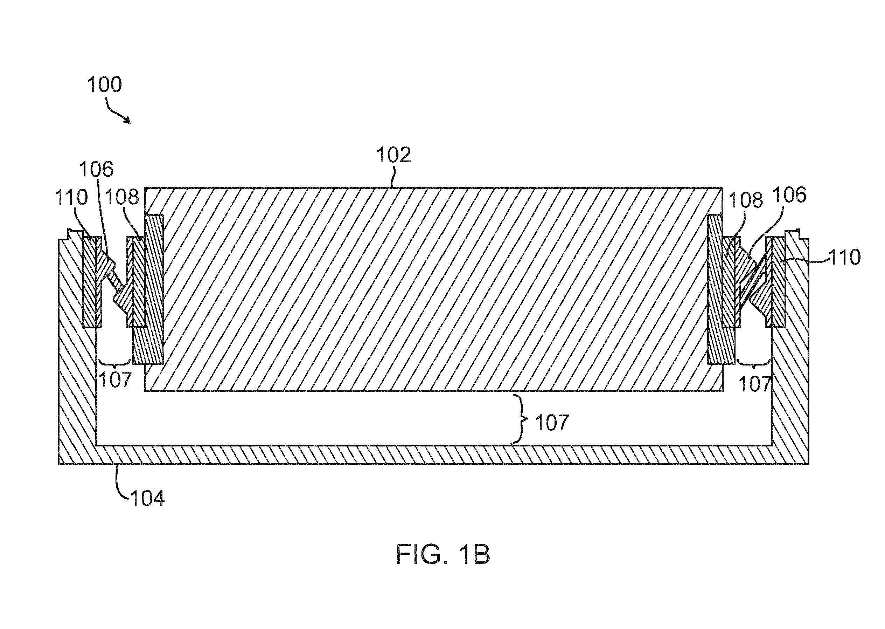

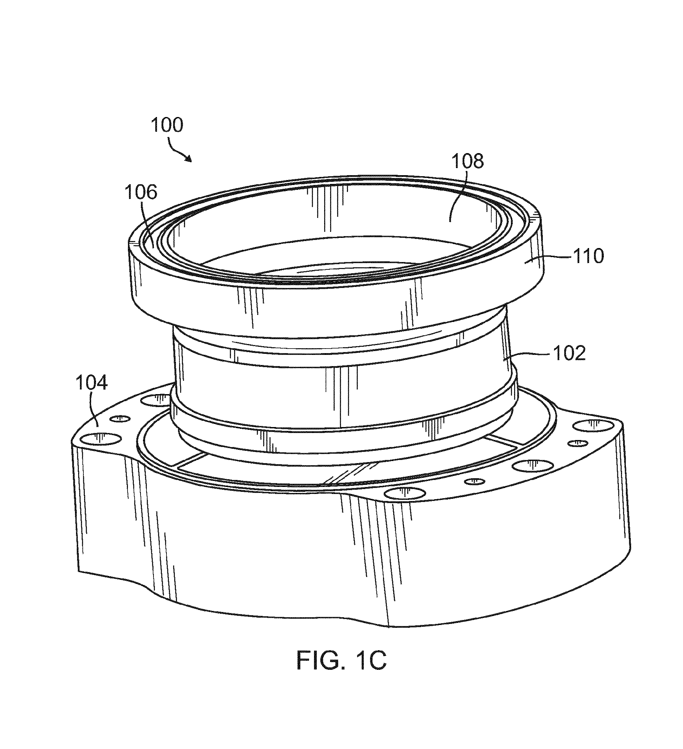

Figure 1A is a perspective view of a system 100, Figure 1B is a cross-sectional view of the system 100, and Figure 1C is an exploded view of the system 100. The system 100 includes an isolated portion 102 mechanically coupled to a non-isolated portion 104 with a passive isolator 106. The isolated portion 102 can include a protected sensitive instrument such as an inertial sensor assembly (ISA). The isolator 106 comprises one or more components composed of an elastomer that are disposed between the isolated portion 102 and the non-isolated portion 104 and mechanically couple the isolated portion 102 to the non-isolated portion 104. The isolator 106 allows displacement (i.e., relative motion) between the isolated portion 102 and the non-isolated portion 104. The isolator 102 acts as a passive isolation system to absorb motion related energy from non-isolated portion 102 in order to reduce energy transfer from the non-isolated portion 104 to the isolated portion 102.

In the example shown in Figures 1A-1C, the isolator 106 has a generally annular shape with the isolated portion 102 connected to the inner side of the annular shape and the non-isolated portion 104 connected to the outer side of the annular shape. In other examples, the positions of the isolated portion 102 and non-isolated portion 104 can be different (e.g., opposite) than shown in Figures 1A-1C. In the example shown in Figures 1A-1C, the isolated portion 102 comprises a generally disk shaped structure; however, in other examples, the isolated portion 102 and/or isolator 106 can have other shapes. For example, the isolator 106 can be rectangular or triangular.

In the example shown in Figures 1A-1C, the isolator 106 is a monolithic structure having the desired features and shape (e.g., annular). In other examples, the isolator 106 is composed of multiple sections disposed between the isolated portion 102 and the non-isolated portion 104. The multiple sections can be disposed such that the multiple sections (e.g., discrete and discontinuous elements) collectively form the desired shape of the isolator (e.g., a generally annular shape).

In the example shown in Figures 1A-1C, an inner ring 108 and an outer ring 110 are used to support the isolator 106 during assembly and to aid in mounting the isolator 106 to the isolated portion 102 and the non-isolated portion 104. The outer ring 110 is mounted to the non-isolated portion 104, and the inner ring 108 is mounted to the isolated portion 102. In an example, the inner ring 108 and outer ring 110 are composed of a metal. The system 100 can be constructed by mounting the isolated portion 102, inner ring 108, isolator 106, and outer ring 110 to the non-isolated portion 104. When the system 100 is constructed the rings 108, 110 are mechanically fixed to the isolated portion 102 and non-isolated portion 104 respectively. The rings 108, 110, therefore, displace with their respective portion 102, 104 and the elastomer of the isolator 106 couples the rings 108, 110 together.

As discussed herein, in examples including an inner and outer ring 108, 110 to hold the isolator 106, the inner ring 108 is considered part of the isolated portion 102 and the outer ring 110 is considered part of the non-isolated portion 104, since the inner ring 108 and outer ring 110 are mechanically fixed to the isolated portion 102 and the non-isolated portion 104 respectively when the system 100 is constructed. Thus, in examples including an inner ring 108 and an outer ring 110, the isolator 106 (or portions thereof) can be connected to the isolated portion 102 by being connected to the inner ring 108, and the isolator 106 (or portions thereof) can be connected to the non-isolated portion 104 by being connected to the outer ring 110. In other examples, the system 100 does not include an inner ring 108 and/or outer ring 110, and the elastomer of the isolator 106 is mounted to the isolated portion 102 and/or the non-isolated portion 104 without an inner ring 108 and/or outer ring 110.

The system 100 defines a sway space 107 which is a distance between the isolated portion 102 and the non-isolated portion 104 when no force is on the system 100. The length of the sway space 107 depends on the geometry of the isolated portion 102, non-isolated portion 104, and the isolator 106. The sway space 107 and can have a different distance or the same distance in different locations and/or directions. In an example, a portion of the sway space 107 can be less than 0.25 inches across, although other distances are possible.

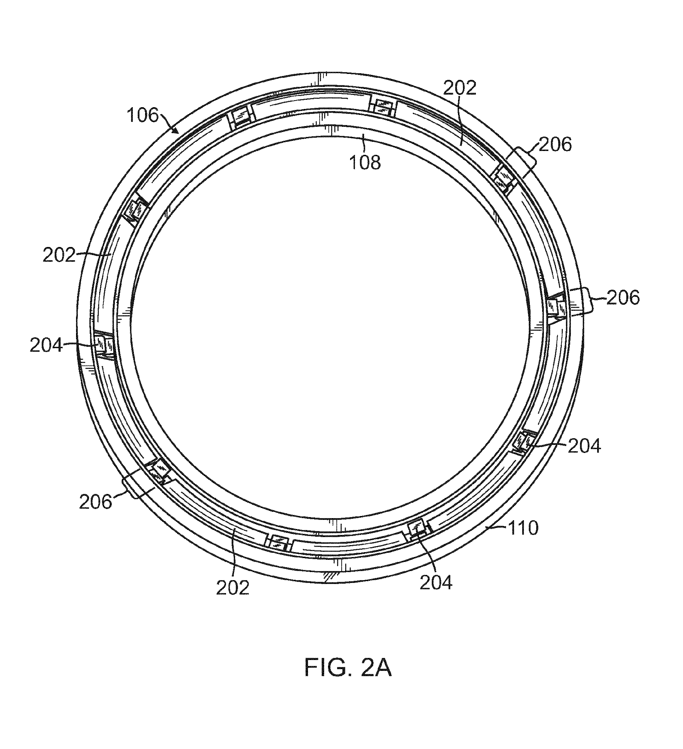

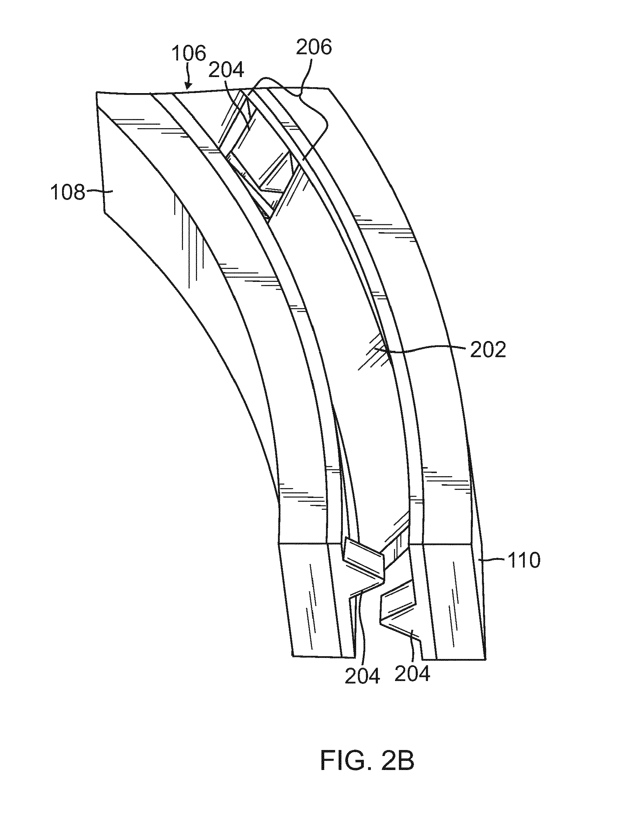

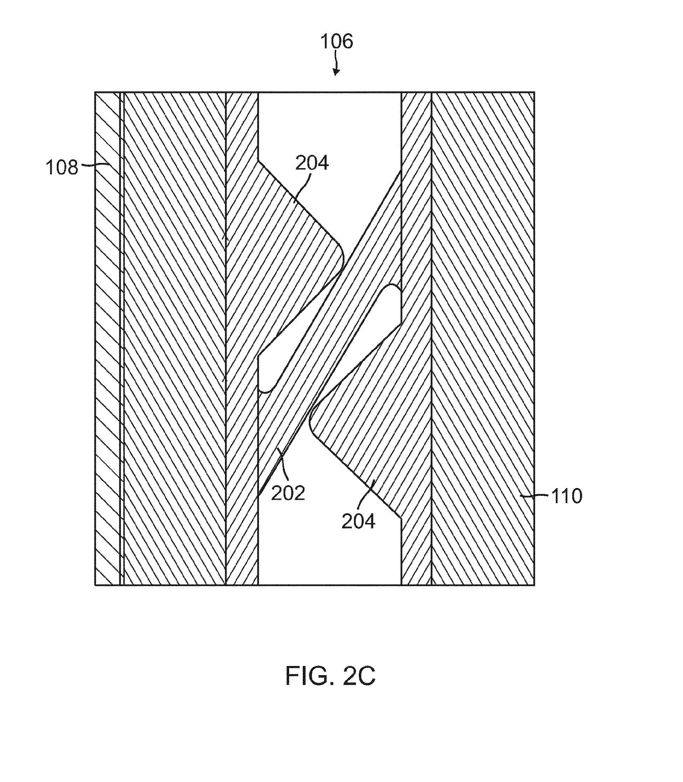

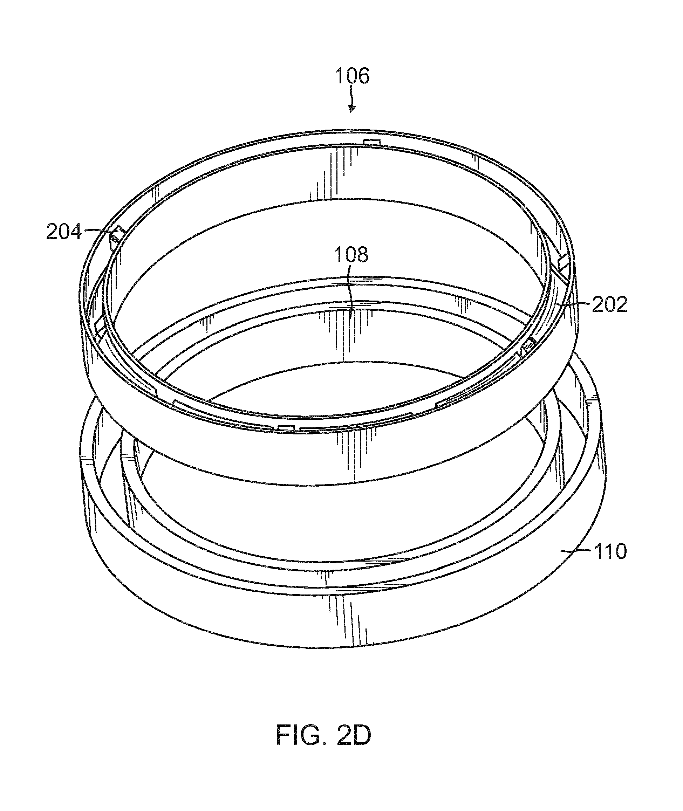

Figures 2A, 2B, 2C, and 2D are further illustrations of the example isolator 106 shown in Figures 1A-1C. Figure 2A is a perspective view, Figure 2B is a magnified cut-away view, Figure 2C is a cross-sectional view, and Figure 2D is an exploded view of the isolator 106. In this example, the isolator 106 is mounted between the inner ring 108 and outer ring 110. The inner ring 108 is concentric and in plane with the outer ring 110.

The isolator 106 which is composed of an elastomeric material includes a main portion 202 and a plurality of secondary features 204. The main portion 202 is connected to both the non-isolated portion 104 and the isolated portion 102 and is the portion of the isolator 106 that mechanically couples the non-isolated portion 104 to the isolated portion 102. Although the main portion 202 is illustrated herein (i.e., in Figures 1B, 2A-2D, and 5A-5D) as including a diagonally disposed portion connecting the isolated portion 102 to the non-isolated portion 104, other geometries and/or orientations can be used as known to those skilled in the art of isolator design.

The plurality of secondary features 204 are disposed on both the non-isolated portion 102 and the isolated portion 104 within the annular shape formed by the main portion 202. The features 204 can comprise protrusions composed of elastomer that extend from the isolated portion 102 and non-isolated portion 104. A secondary feature 204 is configured to engage with an opposing secondary feature 204 or an opposing surface to provide increased resistive force for further displacement. In an example, the features 204 have a shape and disposition that increasingly engages as the isolated portion 102 further displaces and increasingly increases the resistive force as the features 204 further engage. In this example the main portion 202 and the plurality of features 204 are portions of a monolithic elastomeric structure that is the isolator 106. The main portion 202 and the plurality of features 204 can be epoxied or molded onto the inner ring 108 and outer ring 110. In other examples, the main portion 202 and the plurality of features 204 can be mounted directly to the isolated portion 102 and the non-isolated portion 104.

In the example shown in Figures 2A-2D the features 204 are disposed opposing one another such that they can engage during displacement of the isolated portion 102. That is, a feature 204 on the non-isolated portion 104 is disposed generally opposite a feature 204 on the isolated portion 102. Secondary features 204 that are configured to engage with one another (e.g., that disposed opposite one another) define a set of features 204. As shown in Figures 2A-2D, the isolator 106 can include multiple sets of features 204. In an example, the isolator 106 includes an odd number multiplied by two (e.g., 2, 6, 10, 14, 18) sets of opposing features. In the example shown in Figures 1A-1C, ten sets of opposing features are shown. This example includes two features 204 in each set; however, in other examples more than two features 204. The isolator 106 can also include individual secondary features 204. In an example, the annular shaped isolator 106 includes at least three sets of features. Different sets of features 204 can be disposed around the annular shape to attenuate energy in different directions. For example, the sets of features 204 can be generally evenly spaced around the annular shape to generally evenly dissipate energy in all directions parallel to the plane of the annular ring. Disposing the sets of features 204 around the annular shape can also aid in dissipating energy in other directions (e.g., at varying angles with respect to the annular shape).

Additionally, in the example shown, the opposing features are offset from one another in a direction perpendicular to a plane of the annular shape formed by the isolator 106. Thus, the opposing features 204 will engage when the isolated portion 102 displaces in the direction perpendicular to the plane of the annular shape in combination with displacement of the isolated portion 102 towards the non-isolated portion 104 at the location of the opposing features 204. The opposing features 204, therefore, can provide secondary damping for movement in this perpendicular direction in addition to damping in directions within the plane of the annular shape. In this manner, the relative positions of the opposing features 204 can be selected to damp displacement in a desired direction.

The main portion 202 is configured to function as the main spring mass damper for the isolator 106. As the main spring mass damper, the main portion 202 provides spring and damper effects for the isolated portion 102 at all times, regardless of the position of the isolated portion 102 with respect to the non-isolated portion 104. Force applied to the system 100 can cause displacement between the isolated portion 102 and the non-isolated portion 104. Absent any secondary features 204, if the displacement of the isolated portion 102 in any direction is equal to the sway space 107 in that direction, the isolated portion 102 will make contact with the non-isolated portion 104. Depending on the force of this contact, the isolated portion 102 could be damaged and/or the performance of devices (e.g., IMU or sensor) on the isolated portion 102 could be degraded. Accordingly, it is desirable to reduce or eliminate contact between the isolated portion 102 and the non-isolated portion 104.

Design of the isolator 106 involves a tradeoff between the vibration damping and displacement damping due to directional force (e.g., a shock). Vibration damping by the isolator 106 can be increased by designing the isolator 106 to have a more compliant spring constant. Displacement damping, however, can be increased by designing the isolator 106 to have a less compliant spring constant. Moreover, the spring mass damper effects provided by the main portion 202 can change during displacement of the isolated portion 102 with respect to the non-isolated portion 104, due to changes in the geometry of the main portion 202 as the isolated portion 102 displaces.

With no or little directional force on the system 100, the plurality of features 204 are disengaged allowing the lower spring constant of the main portion 202 to damp or filter the vibrational energy. At a threshold distance of displacement of the isolated portion 102 with respect to the non-isolated portion 104, however, one or more of the plurality of features 204 begin engaging. Engagement of the plurality of features 204 increases the total spring constant of the isolator 106 and increases the amount of force required to continue displacement. The features 204, therefore, act like a secondary spring to the main portion 202 to attenuate a shock event faster than the main portion 202 alone. Thus, the isolator 106 can have good vibration damping and good displacement damping in the same design. In an example, the geometry of the plurality of features 204 is selected such that as the displacement of the isolated portion 102 increases, the plurality of features 204 engage further and the total spring constant of the isolator 102 increases as the plurality of features 204 engage further resulting in further force damping. That is, the amount of force required to continue displacement increases as the plurality of features 204 engage. In some examples, the geometry of the plurality of features 204 can be selected such that the amount of force exponentially increases as the plurality of features 204 further engage. Accordingly, during displacement of the isolator portion 102 that is smaller than required to engage the plurality of features 204, the spring mass damper of the isolator 106 is based on the main portion 202 without effects from the plurality of features 204. During displacement of the isolator portion 102 that is large enough to engage the plurality of features 204, the spring mass damper of the isolator 106 is based on the main portion 202 and the plurality of features 204. As used herein, a feature 204 begins to engage when the features 204 contacts an opposing surface, such as when the feature 204 contacts an opposing feature 204.

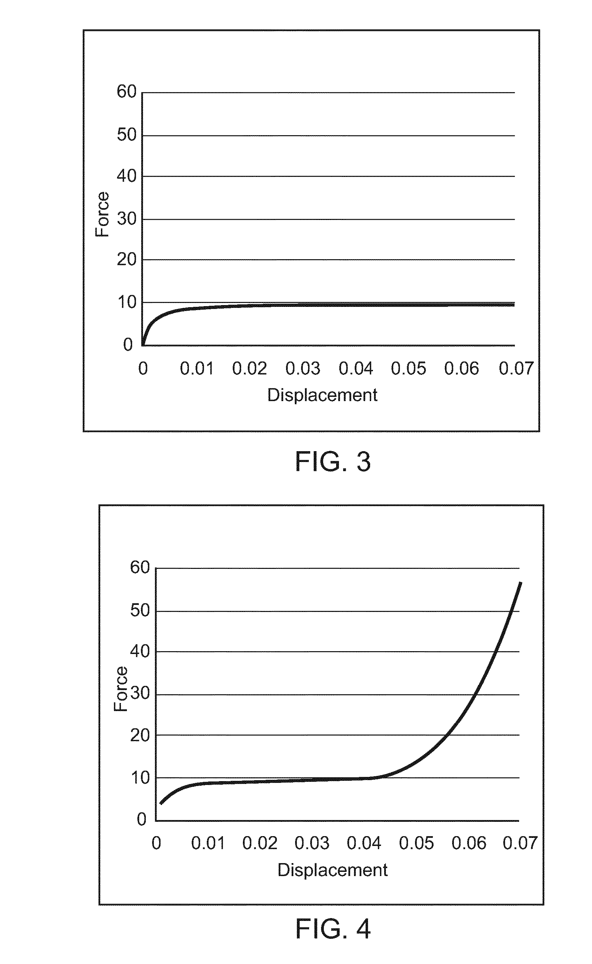

Figure 3 is a graph illustrating an example force-deflection response of the main portion 202 of the isolator 106 without effects from the plurality of features 204. As shown, once an initial magnitude of displacement occurs, the force required to continue displacement of the isolated portion 102 is about the same as displacement increases. Figure 4 is another graph illustrating an example response of the isolator 206 including the effects of both the main portion 202 and the plurality of features 204. In this example, the plurality of features 204 begin to engage at around 0.04 magnitude of displacement on the graph of Figure 4. As shown, during displacement less than required to engage the plurality of features 204 (i.e., displacement less than 0.04 inches), the magnitude of force required to continue displacement beyond approximately 0.04 is about the same. Once the isolated portion 102 has displaced enough to engage the plurality of features 204 at 0.04 magnitude displacement, the engagement of the plurality of features 204 causes the amount of force required to continue displacement of the isolated portion 102 to increase. As shown, the plurality of features 204 cause the amount of force required to increase exponentially. This increase in the force required can reduce the likelihood that the isolated portion 102 will contact the non-isolated portion 104 during large amplitude shocks.

The design of the isolator 106 and the sway space 107 provides the isolation for the isolated portion 102. The sway space 107 can be selected to be of a particular distance so that in normal operation, the isolated portion 102 does not make rigid contact with the non-isolated portion 104. The sway space 107 and the varying spring constant of the isolator 106 can be selected such that the isolated portion 102 can displace relative to the non-isolated portion 104 under most environmental conditions, but reduce the likelihood that rigid contact will be made with the non-isolated portion 102 during some environmental conditions.

The distance of the sway space 107 is also selected small enough to minimize the differential velocity of the isolated portion 102 relative to the non-isolated portion 104 if an impact occurs. The physical geometry and material characteristics of the plurality of features 204 are selected such that as opposing features 204 engage, the effective dampening by the features 204 increases rapidly, such as exponentially, linearly, or parabolically, to quickly attenuate the force. The plurality of features 204 can be designed to compress during engagement in order to achieve the increase in the spring constant. Having a more effective dampening that increases rapidly allows the system 100 to be designed with limited sway space 107.

The material characteristics of the isolator 106 can be selected to achieve the desired shock and/or vibration attenuation and damping, Q, from the non-isolated portion 104. As mentioned above, the main portion 202 and the secondary features 204 can be composed of an elastomeric material, such as vulcanized rubber, resin, silicon, elastomer, polymer, plastic, styrofoam, metal, or memory foam that tends to absorb the impact energy, deform and attenuate the shock and/or vibration. In some examples, the secondary features 204 may be a relatively harder material with less elasticity (e.g. higher Young's modulus) than the main portion 202. In an example, the main portion 202 could be made of a phenyl-methyl vinyl silicone material and the features 204 made of another material having a higher Young's modulus (i.e. stiffer material), or they can both be made of the same material. It may be easier and more cost-effective to use one material. In some examples, the material for either the main portion 202 or the features 204 has a Young's modulus lower than 0.15 GPa. In some examples, the main portion 202 and/or secondary features 204 can be constructed of multiple materials.

As mentioned above, the geometry of the main portion 202 and the features 204 can also be selected. In an example, the diameter of the annular ring formed by the isolator 106 may be about 2 inches and its depth (perpendicular to the plane of the ring) less than about 0.2 inches. In an example, the inner and outer rings 108, 110 can have a thickness of less than about 0.07 inches. In an example, the sway space 107 can range from 0.010 inches to 0.250 inches. In an example, the features 204 can extend to a height from surrounding surfaces in the range of 0.02 to 0.07 inches. The thickness, depth, width, and geometry of the features 204 can vary depending on the distance of the sway space 107 at their location, and/or based on design objectives. In the example shown in Figures 1B and 2A-2C, the features 204 are shown as having a rounded triangular cross-section; however, other geometries can be used. For example the geometry of one or more features 204 can vary in all 3-dimensions, such as in a pyramid or dome shaped, or can vary in 2-dimensions and be uniform in 1-dimension such as the rounded triangular shapes illustrated, triangular with a sharp corner. More complex geometries can also be used as discussed in more detail with respect to 6A-6G. Moreover, in some examples, different features 204 of an isolator 106 can have different geometries. Thus, different geometries can be used in different locations to achieve different or the same effects.

In the example shown in Figures 2A-2D, the main portion 202 defines circumferential gaps 206 where no main portion 202 couples the isolated portion 102 to the non-isolated portion 104. That is, the circumferential gaps 206 are an area where no elastomeric portion is connected to both the isolated portion 102 (e.g., the inner ring 108) and the non-isolated portion 104 (e.g., the outer ring 110). In this example, the secondary features 204 are disposed within these circumferential gaps 206. The main portion 202 can define multiple circumferential gaps 206, and the gaps 206 can be evenly spaced about the annular shape. Different sets of features 204 can be disposed in different gaps 206. In an example there are ten circumferential gaps 206 and ten sets of features 204, however, in other examples, there may be more or less than ten circumferential gaps 206 and sets of features 204.

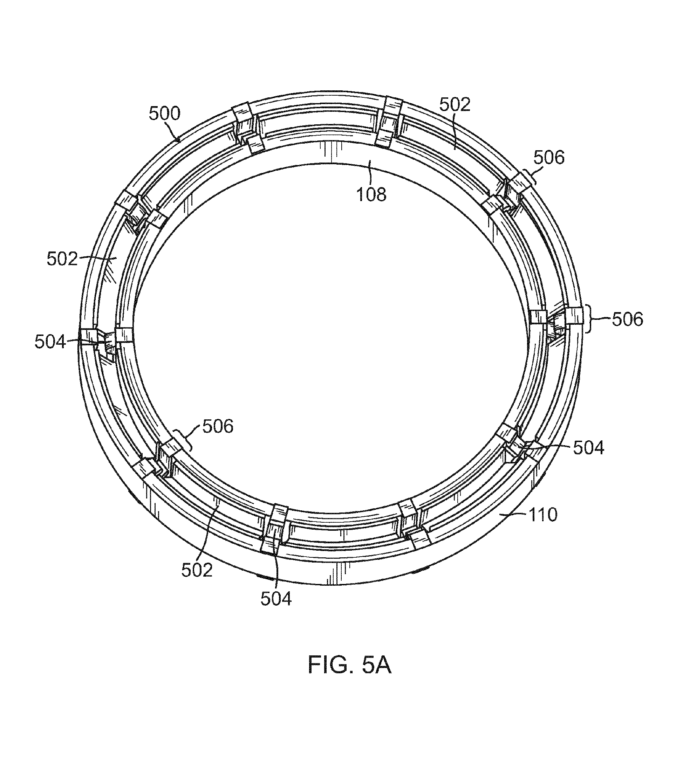

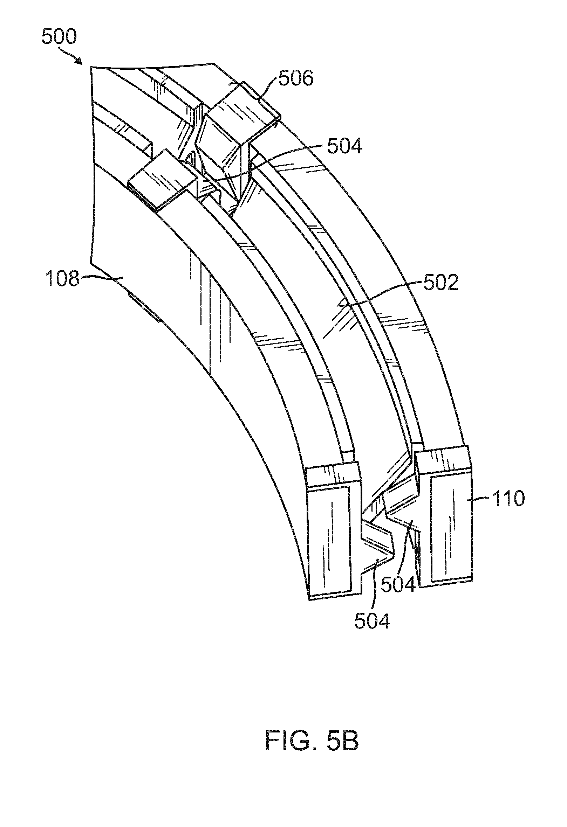

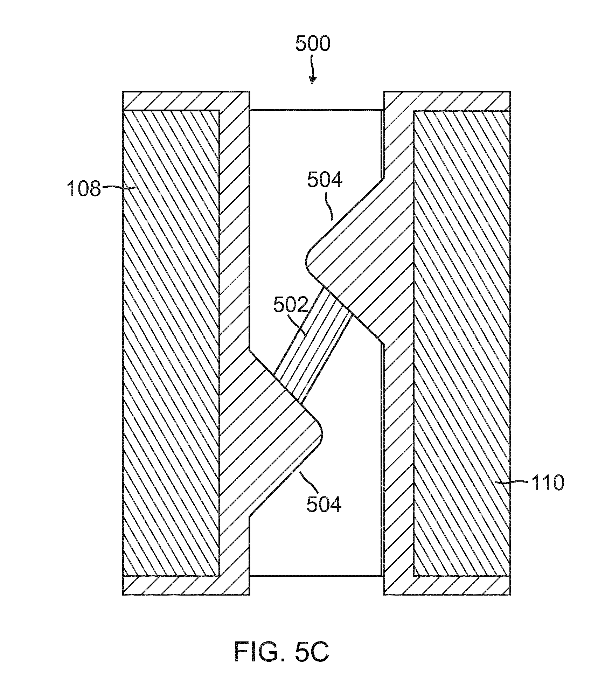

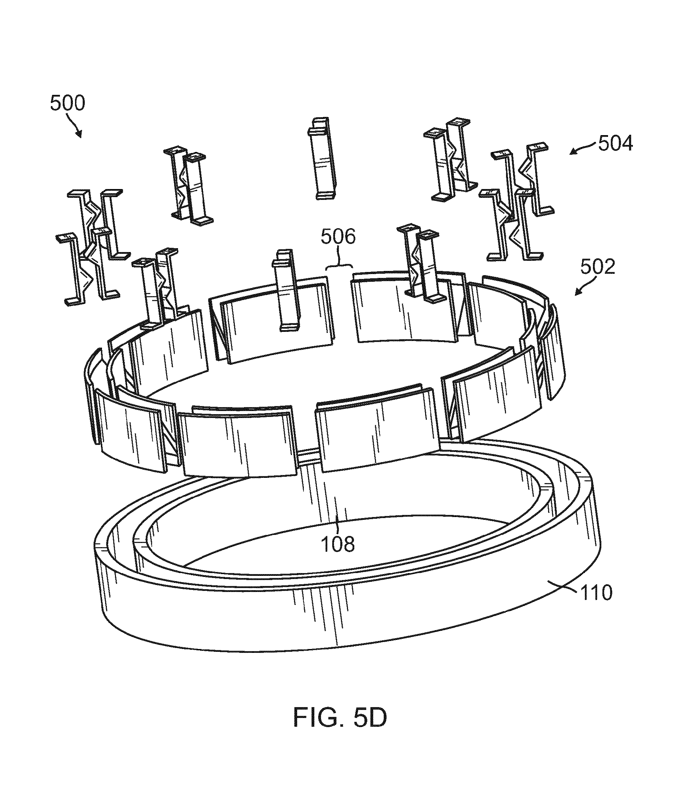

Figures 5A, 5B, 5C, and 5D are illustrations of another example isolator 500 that could be used in the system 100 shown in Figures 1A-1C. Figure 5A is a perspective view, Figure 5B is a magnified cut-away view, Figure 5C is a cross-sectional view, and Figure 5D is an exploded view of the isolator 500. Similar to the isolator 106 shown in Figures 2A-2D, the example isolator 500 is mounted between an inner ring 108 and an outer ring 110. In the example shown in Figures 5A-5D, however, the isolator 500 is composed of multiple sections of elastomeric material. For example, the main portion 502 is composed of multiple distinct pieces of elastomeric material. The pieces of elastomeric material are disposed to collectively form the annular shape of the isolator 500. Along with being disposed to form the annular shape, the multiple sections are disposed to define circumferential gaps 506 between the sections. In this example, the sections of the main portion 502 are substantially similar in size, however, in other example different section may span varying distances. For instance, shorter sections may span only 2 degrees of the arc, whereas the longer sections may span 10 degrees of the arc. The secondary features 504 also comprise multiple distinct pieces of elastomeric material. In this example, each piece of elastomeric material having a secondary feature 504 thereon is disposed within the circumferential gaps 506 and is therefore within the annular shape formed by the sections of the main portion 502.

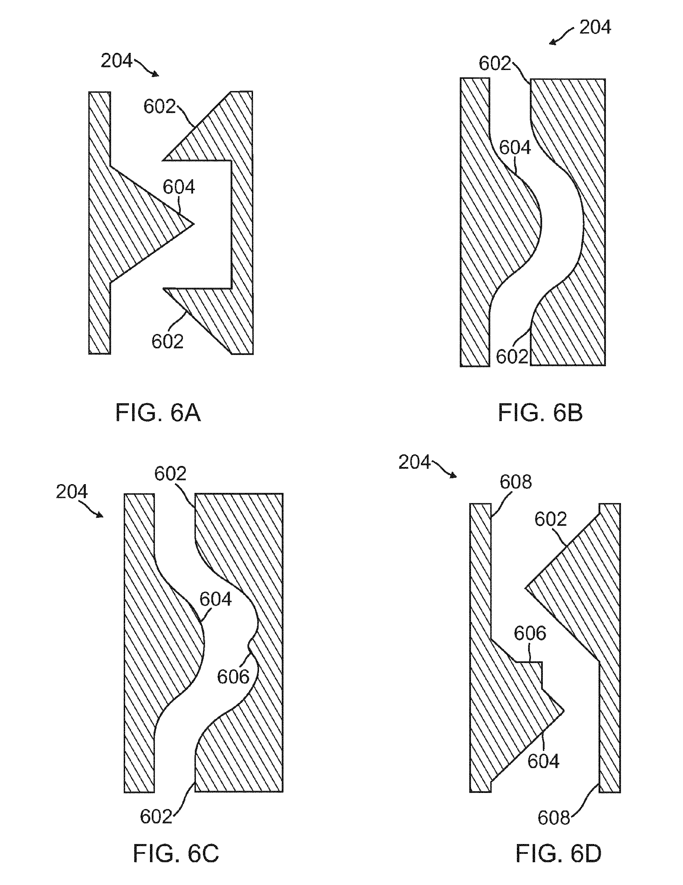

Figure 6A depicts a side view, in cross section, of an embodiment of a set of opposing features 204. Figures 6B and 6C depict other embodiments of a set of opposing features 204 having a more rounded shape (e.g., dome shaped). Figures 6D - 6F illustrate yet other embodiments of a set of opposing features 204 comprising projections with smaller projections thereon and/or nearby. The features and advantages of each of these exemplary sets of opposing features 204 are described in turn, but they all comprise some of the following characteristics. There are an inner ring feature 602 mounted to the portion of the system 100 connected to the inside of the isolator 106 (e.g., the isolated portion 102) and an outer ring feature 604 mounted to the portion of the system 100 connected to the outside of the isolator 106 (e.g., the non-isolated portion 104).

The example outer ring feature 604 of Figure 6A is a triangular projection that is aligned with a trough-like region defined by the inner ring feature 602. That is, the triangular projection of the outer ring feature 604 is disposed opposite the trough-like region defined by the inner ring feature 602. The trough-like region of the outer ring feature 604 is defined by two half-triangle portions on either side of the trough-like region. In an example, there are multiple (e.g., ten) such sets of features 602, 604 around the circumference of the isolator 106. As the features 602, 604 include projections outward from the isolated portion 102 and non-isolated portion 104 of the system 100, during displacement of the isolated portion 102 in the requisite direction, the features 602, 604 will come into contact before the rigid structure of the isolated portion 102 comes into contact with the rigid structure of the non-isolated portion 104. Thus, the sway space 107 is larger than the distance between the features 602, 604. The surfaces of the triangular and half-triangle projections in the features 602, 604 are smooth and have substantially no smaller bumps as depicted in Figs. 6D - 6F.

In an example, the inner ring features 602 are oriented such that the two half-triangle projections are apart from one another in a direction perpendicular to the plane of the annular ring formed by the isolator 106 in order to protect against motion in the direction perpendicular to the plane of the annular ring. Accordingly, the first projection can contact the projection of the outer ring feature 604 during motion occurring at an "upward" angle and the second projection can contact the projection of the outer ring feature 604 during motion occurring at a "downward" angle to damp different angled motions partially perpendicular to the plane of the annular ring of the isolator 106. In other embodiments, the inner ring features 602 and outer ring features 604 are oriented in different directions such as being spaced apart from one another in a circumferential direction with respect to the annular ring formed by the isolator 106. These example orientations apply to the features 602, 604 in each of Figs. 6A-6G. In another embodiment, Figs. 6A - 6G comprise cross-sections for both the top and side view because the figures are 2-dimensional and smooth surfaces, bumps, and troughs can be defined on all sides of the projections.

In an example, the projection of the outer ring feature 604 is an isosceles triangle and the apex of the triangle is opposite the middle of the trough defined in the inner ring feature 602 when there is substantially no relative motion between inner ring feature 604 and the outer ring feature 604. The trough defined by the inner ring feature 602 is defined between and walled by two right triangles. The narrowest lateral distance X of the sway space 107 is located where the apex of each triangle is directly opposite a point on the other ring. One advantage of the configuration of Fig. 6A is that the distances between features 602, 604 are better defined because sharp edges and straight sections face opposite each other and there is little ambiguity as to where the shortest distances exist. In Fig. 6A, the narrowest distances are well defined for purposes of simulation and calculation as to the amount of force that is required to overcome a particular distance.

In some examples, adjacent sets of features 204 around the annular ring formed by the isolator 106 can be flipped in orientation. Thus, for example, the orientation of the sets of features 204 can alternate around the annular ring. This can aid in the isolator 106 providing an even force damping for differing directions of displacement.

Figure 6B is a cross-sectional view of another example of a set of features 204. Here, the outer ring feature 604 is a generally rounded surface and the inner ring feature 602 defines a matching generally rounded trough. In an example, the trough of the outer ring feature 604 is defined by a first projection that is located above a middle of the cross-section, and a second projection that is located below the middle of the cross-section. Accordingly, the first projection can contact the projection of the outer ring feature 604 during motion occurring at an "upward" angle and the second projection can contact the projection of the outer ring feature 604 during motion occurring at a "downward" angle to damp different angled motions partially perpendicular to the plane of the annular ring of the isolator 106.

Since the projection on the inner ring feature 602 and the trough of the outer ring feature 604 are rounded, the lateral distance is substantially the same across the cross-section when no force is on the system 100. Figure 6C is generally similar to Figure 6B, but there is a nub 606 at the "bottom" of the trough in the inner ring feature 602. The nub 606 is a small, with respect to the trough, projection. The first point of contact between the inner ring feature 602 and the outer ring feature 604 is likely to be at the apex of the nub 606. The nub 606 increases the rapidity with which the damping and attenuation engages. Having a nub 606 also provides an easy way to determine the narrowest lateral distance between the features 602, 604. Also, it may be easier to precisely locate and position the features 602, 604 relative to each other when there is a nub 606 for geometric and alignment guidance.

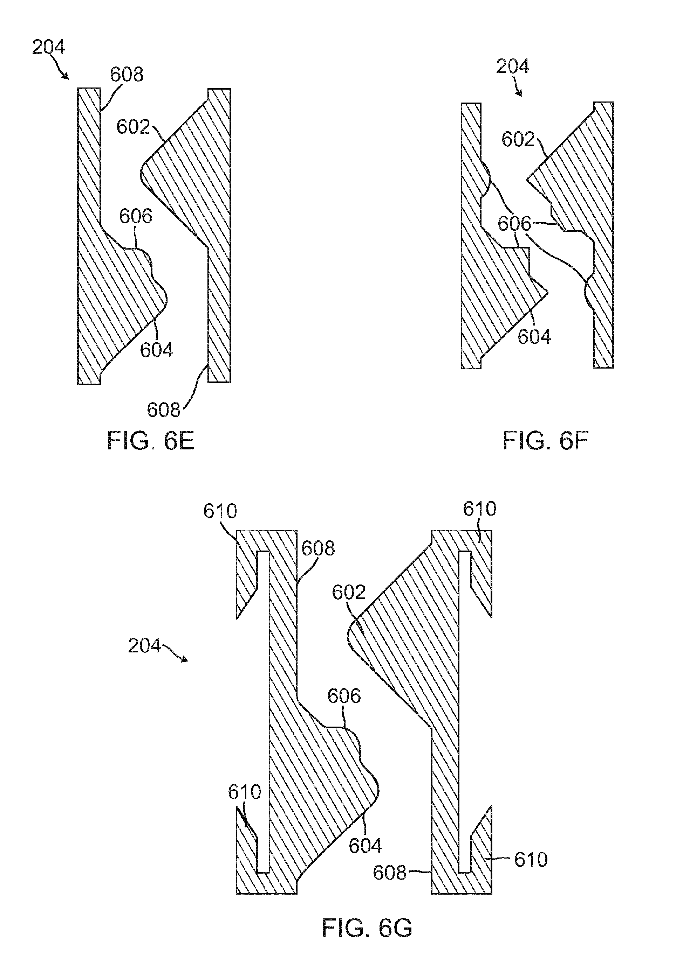

Figures 6D - 6F are further embodiments of a set of features 602, 604 having a more symmetrical configuration. Here, the inner ring feature 602 and the outer ring feature 604 comprise individual projections. The projections are fairly symmetrical and primarily isosceles triangles in shape. The isosceles triangles have flat sections 608 adjacent thereto to enable contact between the projections. The projection on the outer ring feature 602 also has a nub 606. Here, the nub 606 is a further projection from a surface of the projection, the further projection being smaller than the main projection. The nub 606 can also provide a more gradual increase in damping and attenuation. The embodiment in Fig. 6E is somewhat different from those in Figs. 6D in that Fig. 6E depicts generally triangular projections with rounded peaks rather than sharp apexes. Figure 6F is another embodiment illustrating a nub 606 on each of the opposing main projections and another nub 606 adjacent to the main projections.

Rounding the peak further, in yet another embodiment, Fig. 6G, the features 602, 604 are substantially rounded or spherical - within the tolerance and capability to manufacture round surfaces. The round features 602, 604 are followed by flat sections 608 adjacent to the features 602, 604. The rounded features 602, 604 in Fig. 6E or in Fig. 6G could make it easier to manufacture the isolator 106. In particular, rounded features 602, 604 may enable the isolator 106 to be pulled out of the cast more easily.

Figures 6A - 6G are not the only possible configurations for a set of features 602, 604. In other configurations, the thickness, height, shape, or disposition of the set of features 602, 604 may be different. Moreover, Figs. 6A - 6G only illustrate 2-dimensions of the features 602, 604. The features 602 actually extend across an entire width of the isolator 106. In other examples, the feature 602 and/or 604 can taper off across the width of the isolator 106 as shown in Figs. 5A and 5B. In an example, shown in Figure 6G, the backside of each side of the isolator 106 could have a hook structure 610 (e.g., a hanger clip) that aids in clipping the members to a structure.

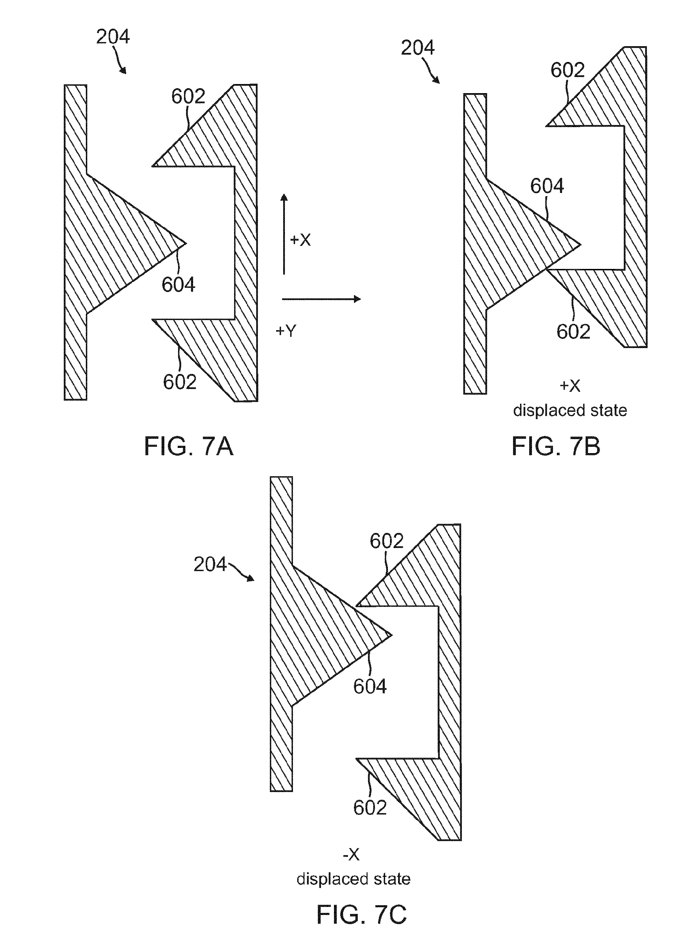

Figures 7A - 7F illustrate some possible relative motions occurring between the inner ring feature 602 and outer ring feature 604 of Figure 6A. The drawings are limited to a 2-dimensional plane, but the actual possible relative motions can be characterized by six directions or degrees of freedom: x, y, z and a rotational angle about each axis direction x, y and z. Depending on the type of motion that is expected to occur, it is possible to design the isolator 106 so that it can absorb and attenuate an impact for shocks occurring with any six degrees of freedom. In some examples, additional elastomeric material may be present.

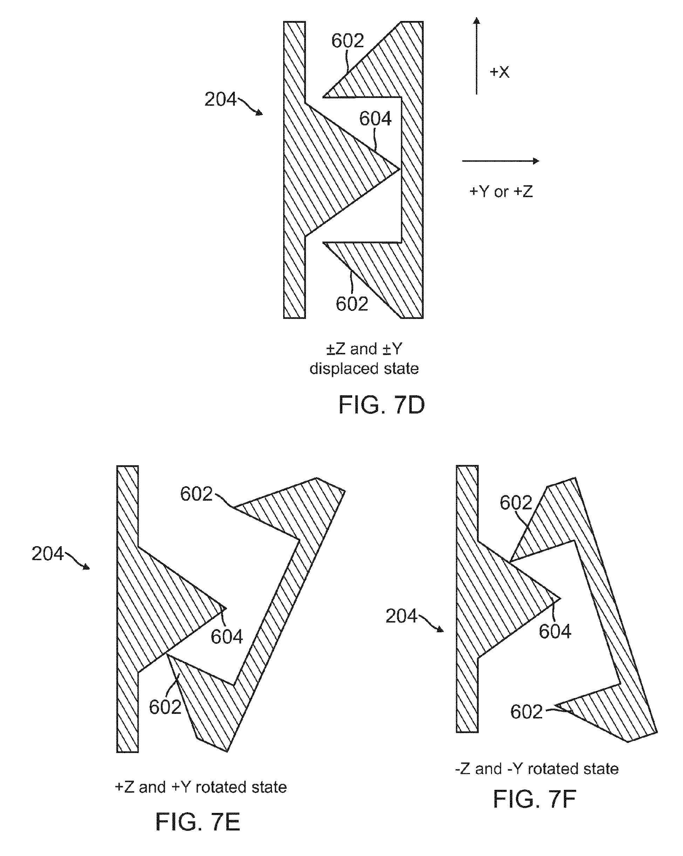

Turning now to Fig. 7A, Fig. 7A depicts the normal state where there is no relative motion between features 602, 604. Fig. 7A also depicts a coordinate system with a vertical axis direction labeled "x," and a lateral axis direction labeled "y," and a direction perpendicular to the plane of the paper (in and out of the paper) being the "z" axis. Figs. 7B and 7C illustrate relative movement in the vertical direction, either up or down. Fig. 7D is an example of relative lateral movement. Figs. 7E and 7F depict mostly relative rotational movement about the z axis, along with a small amount of movement in the vertical direction x (up and down). In each of these figures, 7B - 7F, the features 602, 604 are the first portions to contact between the isolated portion 102 and the non-isolated portion 104, the features 602, 604 then deform and absorb some or all of the impact energy.

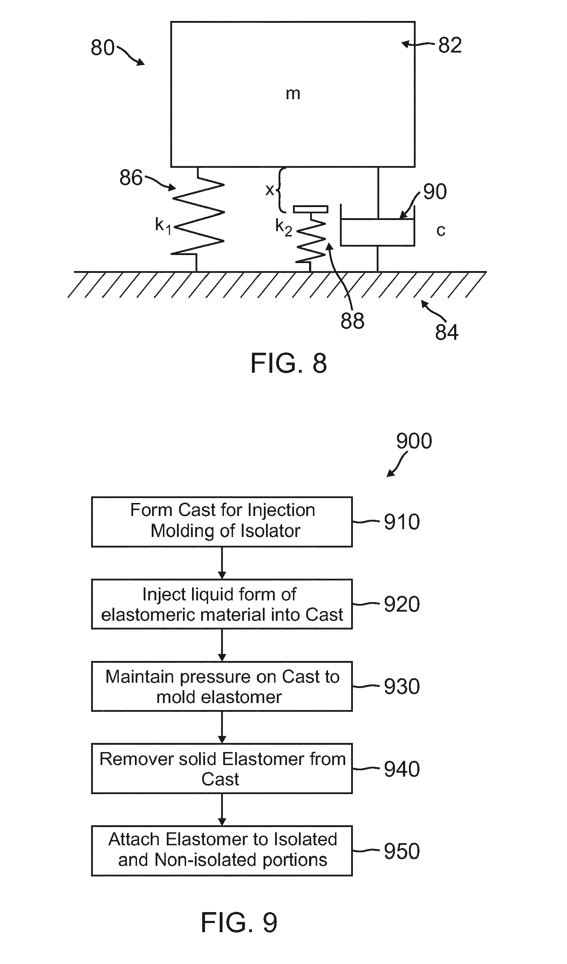

Figure 8 is an example model 80 of the isolator 106. The spring coils 86 and 88 and damper 90 represent some aspects of the elasticity and dampening effect of the materials of a model isolator 80. The mass 82 with mass m corresponds to the mass of the isolator portion 102. Structure 84 corresponds to the non-isolated portion 104. The main spring 86 with its spring constant k1 emulates the main portion 202 of the isolator 106, and secondary spring 88 with its spring constant k2 emulates the secondary features 204. As shown, the secondary spring 88 does not engage until an amount of displacement of the isolated portion 102 causes the secondary features 204 to contact. Damper 90 with damping factor c relates to the Young's modulus, the elasticity and/or resilience of the materials of the isolator 106. The spring 86 is like a tension spring with stretching ability, whereas spring 88 behaves more like a compression spring with compression ability and energy storage; spring 88 takes over when a predetermined distance after the distance X is overcome.

An exemplary resulting behavior of the isolator model 80 is graphically shown in Fig. 4. In the example of Fig. 4, the effective force required to further move the isolated portion 102 relative to the non-isolated portion 104 increases rapidly, such as a ramp, parabolically or exponentially. The effect of the secondary spring 88 is shown in Fig. 4 when the secondary spring 88 engages at the displacement distance 0.04 (X) and exponentially increases the force required to move the isolated portion 102 relative to the non-isolated portion 104. The rapidity of increasing force can depend on the material; if the elastomeric material of the isolator 106 is stiffer, then the curve in Fig. 4 would be steeper.

Stated in somewhat different terms, regardless of a particular embodiment, when a high performance isolation system, designed to protect in six-degrees of freedom, is used to attenuate energy that could normally reach sensitive devices, there is a relative displacement between the non-isolated 104 and isolated portions 102 of the system 100. The amount and type of displacement experienced by the isolated portion 102 depend on the nature of the shock event to which the device is exposed. The protection afforded by the isolation system depends on the material and structure that are characterized by a natural frequency and transmissibility. Where the isolation system can be characterized by an elastomer-based spring mass damper, the amount of displacement has a direct effect on the natural frequency of the isolation system. When the elastomer is deflected, the spring constant of the elastomer is effectively reduced due to the elastomer cross-sectional area decreasing due to impact as well as due to the reduction in its elastomer Young's modulus that is dynamic and exhibits a non-linear behavior. When the spring constant (k) decreases and the mass (M) is maintained, the natural frequency (Fo) of the system decreases (Fo = (1/(2*pi) x squareroot (k/M)). As the natural frequency is reduced, the amount of delta displacement increases due to a less stiff system that is characterized by a lower k. By implementing a design according to the various embodiments disclosed herein, the secondary features 204 engage and add, effectively, a secondary spring to the system. And at some determined amount of displacement, controlled by geometry, the secondary features will engage. These secondary features 204 can be designed to reduce the disturbance at engagement and to effectively increase or maintain the natural frequency of the system as the displacement increases. In an example, the increase provided by the secondary features 204 occurs at a greater rate of change than the main spring's natural frequency is decreasing. In this example, as displacement continues, the overall, net system frequency is still one of increase; thus, an isolation system with this combination of carefully designed primary and secondary springs may require less sway space 107 for a given shock event.

Figure 9 is a flowchart illustrating one exemplary method 900 of manufacturing and assembling the embodiments. In practice, the exact method of manufacture depends on the existing system. In an example, an injection molding process is used to manufacture the embodiments. At block 910, the designed geometry of isolator 106 with its main portion 202 and secondary features 204 is molded to form a mold (cast) design. The molds can be metallic such as made of hardened steel. A high tonnage injection press can close the mold that has cavities with the geometry of the desired isolator. At block 920, a liquid form of the elastomeric material is injected into the mold cavities. Once the cavities are filled, at block 930, a high tonnage holding pressure is maintained to compensate for material shrinkage or to squeeze out excess material. At block 940, once the elastomeric material is sufficiently cool, the mold opens and the solid elastomeric material of the isolator 106 is ejected. Alternatively, if the isolator material is rubbery enough, the elastomeric material could be pulled out of the mold. At block 950, the solid elastomeric material is attached to the surface of the isolated portion 102 and the non-isolated portion 104. Epoxy or other fastening mechanisms hold the elastomer material to the isolated portion 102 and non-isolated portion 104. In examples where the isolator is composed of multiple pieces of elastomer, the multiple pieces can be molded at the same or different times. If molded at different times, the multiple pieces can be individually molded and then arranged to form the annular shape. If molded at the same time, the multiple pieces can be molded as a single piece with thin sections of elastomer connecting different pieces. After molding, the thin sections of elastomer can be removed before or after attaching the elastomer to the rings 108, 110 or isolated and non-isolated portions 102, 104. With respect to the mechanical attachments, an inside of the annular ring formed by the isolator 106 is mounted to the isolated portion 102 and an outside of the annular ring formed by the isolator 106 is mounted to the non-isolated portion 104. The method of mounting depends on a variety of factors such as the environmental conditions to which these objects are subjected, and the texture, curvature or shape. Epoxy, other types of adhesives, clips, fasteners, straps, screws, and nails are some example ways to mount the isolator 106 to its respective structures. For example, the elastomeric material can galvanize or bond to the surfaces (e.g., metal) of the rings 108, 110 or isolated portion 102 and non-isolated portion 104.

In examples where the elastomeric material is mounted between rings 108, 110, the rings 108, 110 can be fabricated or otherwise provided to act as a holder for the elastomeric material. After molding, the elastomeric material can be placed between the rings 108, 110. The inside of the inner ring 108 can be mounted around the isolated portion 102 by, for example, welding, screwing, clamping, gluing or other means of fastening to a desired location. Likewise, the outside of the outer ring 110 can be mounted to the non-isolated portion 104.

There are many advantages of the various embodiments described above. They are cost-effective devices because material such as elastomer are fairly inexpensive. There are some tooling costs to form the molds and casts to manufacture the rings 108, 110, main portion 202, and secondary features 204, but these casts can be re-used many times. Assembling the product is also fairly low cost because assembly can be done in normal environmental conditions at room temperature and atmospheric pressure. Given the relatively low manufacturing and production costs, it should be possible to also apply the embodiments to applications other than protecting inertial sensor systems. The structures should also work for protecting precision semiconductor manufacturing equipment, oil and gas drilling equipment, automobile parts, train parts, agricultural machinery, industrial machinery, high-end electronics, certain artillery equipment, medical instruments, and so on. The embodiments should be particularly effective near industrial or drill sites, airports and train stations, in earthquake prone environments, and anywhere where the ground rattles or where the environment entails vibrations or sharp movements. The embodiments allow an isolation system to be designed to operate where there is limited sway space 107 that would normally be overcome by a high force event and cause performance degradation and/or hardware damage.

The orientation and directions stated and illustrated in this application should not be taken as limiting. For example, the directions, e.g. "top," are merely illustrative and do not orient the embodiments absolutely. That is, a structure formed on its "side" or "bottom" is merely an arbitrary orientation in space that has no absolute direction. Also, in actual usage, a packaged and isolated object may well be turned on its "side" because, for example, aircrafts and vehicles travel and turn in all directions. Thus, the stated directions in this application are arbitrary designations.

Although specific embodiments have been illustrated and described above, it will be appreciated by those of ordinary skill in the art that any arrangement, which is calculated to achieve a same purpose, may be substituted for the specific embodiments shown. Therefore, it is manifestly intended that this invention be limited only by the claims and the equivalents thereof.

### Example Embodiments

Example 1 includes a motion attenuating isolator comprising: a main portion configured to couple an isolated portion of a system to a non-isolated portion of the system, the main portion including one or more members composed of an elastomeric material, the one or more members configured to form an annular shape between the isolated portion and the non-isolated portion, the main portion defining one or more circumferential gaps within the annular shape; and a plurality of sets of secondary features disposed within the circumferential gaps, wherein secondary features in the plurality of sets of secondary features are composed of an elastomeric material, wherein each set of secondary features includes a first secondary feature that extends from the isolated portion and a second secondary feature that extends from the non-isolated portion of the system, wherein each first secondary feature is configured to engage with a corresponding second secondary feature during displacement of the isolated portion with respect to the non-isolated portion in a respective direction.

Example 2 includes the isolator of Example 1 comprising: a first ring structure attached to the main portion about an exterior of the annular ring; and a second ring structure attached to the main portion about an interior of the annular ring, the first and second ring structure concentric with one another, wherein the main portion and the plurality of secondary features are disposed between the first ring structure and the second ring structure.

Example 3 includes the isolator of any of Examples 1 or 2, wherein engagement of the first secondary feature with the second secondary feature increases a magnitude of force required to continue displacement of the isolated portion in the respective direction.

Example 4 includes the isolator of Example 3, wherein the first secondary feature and the second secondary feature are configured to increasingly engage as the isolated portion further displaces in the respective direction, wherein increased engagement of the first secondary feature with the second secondary feature increases the magnitude of force required to continue displacement of the isolated portion in the respective direction.

Example 5 includes the isolator of any of Examples 1-4, wherein the main portion and the secondary features are composed of substantially the same elastomeric material.

Example 6 includes the isolator of any of Examples 1-5, wherein the secondary features and the main portion are part of a monolithic piece of elastomeric material.

Example 7 includes the isolator of any of Examples 1-6, wherein main portion is composed of multiple distinct pieces of elastomeric material.

Example 8 includes the isolator of any of Examples 1-7, wherein the at least one of the secondary features is dome-shaped.

Example 9 includes a motion attenuating isolator for an inertial measuring unit comprising: a first holder having an annular shape; a second holder having an annular shape and disposed inside the first holder and concentrically with respect to the first holder; wherein the first holder has a first wall facing the second holder and the second holder has a second wall facing the first holder; a main portion disposed between the first holder and the second holder and connected to the first holder and the second holder, the main portion composed of an elastomeric material; a plurality of sets of secondary features composed of an elastomeric material, each set including a first member comprising a protrusion located opposite second member comprising a protrusion, wherein each first member is mounted to the first wall and each second member is mounted to the second wall, wherein each first member is disposed to engage with each second member during displacement of the first holder with respect to the second holder in a respective direction.

Example 10 includes the isolator of Example 9, wherein engagement of a first member with a respective second member increases a magnitude of force required to continue displacement of the first holder with respect to the second holder.

Example 11 includes the isolator of Example 10, wherein the first member and the respective second member are configured to increasingly engage as the first holder further displaces in the respective direction, wherein increased engagement of the first member with the respective second member increases the magnitude of force required to continue displacement of the first holder in the respective direction.

Example 12 includes the isolator of any of Examples 9-11, wherein the second member defines a trough that is generally aligned with the first member.

Example 13 includes the isolator of any of Examples 9-12, wherein the secondary features and the main portion are part of a monolithic piece of elastomeric material.

Example 14 includes the isolator of any of Examples 9-14, wherein main portion is composed of multiple distinct pieces of elastomeric material.

Example 15 includes a method of manufacturing an isolator, the method comprising: forming a main portion of the isolator from an elastomeric material; forming a plurality of sets of secondary features from an elastomeric material; forming the main portion into an annular shape such that main portion defines a plurality of circumferential gaps; attaching a first ring on an exterior circumference of the main portion; attaching a second ring on an interior circumference of the main portion; disposing secondary features on the first ring to engage with secondary features within a respective set of secondary features on the second ring during displacement of the first ring with respect to the second ring, disposing the plurality of sets of secondary features within circumferential gaps, wherein the secondary features include projections from the first ring and the second ring.

Example 16 includes the method of Example 15, comprising: mounting the main portion, the plurality of secondary features, the first ring, and the second ring between an isolated portion and a non-isolated portion of a system.

Example 17 includes the method of any of Examples 15 or 16, wherein forming the plurality of secondary features including forming one or more of a dome or triangular shaped projection.

Example 18 includes the method of Example 17, wherein forming the plurality of secondary features includes forming a smaller projection on a surface of at least one of the plurality of secondary features.

Example 19 includes the method of any of Examples 15-18, wherein the plurality of secondary features are disposed in sets that include a first secondary feature attached to the first ring and opposing a second secondary feature attached to the second ring.

Example 20 includes the method of any of Examples 15-19, wherein forming the main portion includes forming multiple pieces of elastomeric material; and wherein forming the main portion into an annular shape includes arranging the multiple pieces of elastomeric material into the annular shape.

## Claims

1. A motion attenuating isolator (106) comprising:
a main portion (202) configured to couple an isolated portion (102) of a system (100) to a non-isolated portion (104) of the system (100), the main portion (202) including one or more members composed of an elastomeric material, the one or more members configured to form an annular shape between the isolated portion (102) and the non-isolated portion (104), the main portion (202) defining one or more circumferential gaps (206) within the annular shape; and
a plurality of sets of secondary features (204) disposed within the circumferential gaps (206), wherein secondary features (204) in the plurality of sets of secondary features (204) are composed of an elastomeric material, wherein each set of secondary features (204) includes a first secondary feature (204) that extends from the isolated portion (102) and a second secondary feature (204) that extends from the non-isolated portion (104) of the system (100), wherein each first secondary feature (204) is configured to engage with a corresponding second secondary feature (204) during displacement of the isolated portion (102) with respect to the non-isolated portion (104) in a respective direction.

2. The isolator (106) of claim 1, comprising:
a first ring structure (110) attached to the main portion (202) about an exterior of the annular ring; and
a second ring structure (108) attached to the main portion (202) about an interior of the annular ring, the first and second ring structure (110, 108) concentric with one another, wherein the main portion (202) and the plurality of secondary features (204) are disposed between the first ring structure (110) and the second ring structure (108).

3. The isolator (106) of claim 1, wherein engagement of the first secondary feature (204) with the second secondary feature (204) increases a magnitude of force required to continue displacement of the isolated portion (102) in the respective direction.

4. The isolator (106) of claim 3, wherein the first secondary feature (204) and the second secondary feature (204) are configured to increasingly engage as the isolated portion (102) further displaces in the respective direction, wherein increased engagement of the first secondary feature (204) with the second secondary feature (204) increases the magnitude of force required to continue displacement of the isolated portion in the respective direction.

5. The isolator (106) of claim 1, wherein the main portion (202) and the secondary features (204) are composed of substantially the same elastomeric material.

6. The isolator (106) of claim 1, wherein the secondary features (204) and the main portion (202) are part of a monolithic piece of elastomeric material.

7. The isolator (106) of claim 1, wherein main portion (202) is composed of multiple distinct pieces of elastomeric material.

8. A method of manufacturing an isolator (106), the method comprising:
forming a main portion (202) of the isolator (106) from an elastomeric material;
forming a plurality of sets of secondary features (204) from an elastomeric material;
forming the main portion (202) into an annular shape such that main portion (202) defines a plurality of circumferential gaps (206);
attaching a first ring (110) on an exterior circumference of the main portion (202);
attaching a second ring (108) on an interior circumference of the main portion (202);
disposing secondary features (204) on the first ring (110) to engage with secondary features (204) within a respective set of secondary features (204) on the second ring (108) during displacement of the first ring (110) with respect to the second ring (108), disposing the plurality of sets of secondary features (204) within circumferential gaps (206), wherein the secondary features (204) include projections from the first ring (110) and the second ring (108).

9. The method of claim 8, comprising:
mounting the main portion (202), the plurality of secondary features (204), the first ring (110), and the second ring (108) between an isolated portion (102) and a non-isolated portion (104) of a system (100).

10. The method of claim 8, wherein the plurality of secondary features (204) are disposed in sets that include a first secondary feature (204) attached to the first ring (110) and opposing a second secondary feature (204) attached to the second ring (108).
